# EUROPEAN PATENT APPLICATION

(11) **EP 4 325 378 A1**
(43) Date of publication of application: **21.02.2024**
(21) Application number: 22819283.7
(22) Date of filing: 10.05.2022
(51) Int. Cl.: G06F 16/9535, G06F 16/958

(54) **METHOD AND APPARATUS FOR SEARCHING FOR CONTENT, DEVICE, AND MEDIUM**

(30) Priority: 07.06.2021 CN 202110631031
(71) Applicant: BEIJING BYTEDANCE NETWORK TECHNOLOGY CO., LTD., Beijing 100041 (CN)
(72) Inventor: CHEN, Xin, Beijing 100190 (CN)
(74) Representative: Dentons UK and Middle East LLP
(86) International application number: PCT/CN2022/091918
(87) International publication number: WO 2022/257683

(57) **Abstract**

The present disclosure relates to a method and apparatus for searching for content, a device, and a medium. The method for searching for content comprises: receiving a search keyword, the search keyword matching a target entity object, and the target entity object being an entity object corresponding to a target event; and displaying target content of various types in separate regions on a search results page, the target content at least comprising event information related to the target entity object in the target event, as well as first multimedia content related to the target entity object in the target event. According to an embodiment of the present disclosure, search results can be made to better conform to what a user intends to search for, and a greater abundance of search results can be provided.

## Description

This application claims the priority to the Chinese Patent Application No. 202110631031.7, "CONTENT SEARCH METHOD, APPARATUS, DEVICE, AND MEDIUM" filed with the Chinese Patent Office on June 7, 2021, the entire disclosure of which is incorporated herein by reference as part of the disclosure of this application.

### TECHNICAL FIELD

The present disclosure relates to the field of the multimedia technology, in particular to a content search method, a content search apparatus, a device, and a medium.

### BACKGROUND

A search engine refers to a system that collects information on the internet based on certain strategies and by applying specific computer programs and provides retrieval services to users after organizing and processing the information. The emergence of the search engine provides convenience for users to use the network information, and allows the user to retrieve the information needed by oneself from massive data provided by the internet.

In existing search engines, when the user inputs a keyword for information search, displayed search results often do not match the search intention of the user, thus affecting the search precision and accuracy and deteriorating the experience of the user.

### SUMMARY

In order to solve the above technical problem or at least partially solve the above technical problem, the present disclosure provides a content search method, a content search apparatus, a device, and a medium.

In the first aspect, the present disclosure provides a content search method, including:
receiving a search keyword, where the search keyword matches with a target entity object, and the target entity object is an entity object corresponding to a target event; and
displaying various target contents by region on a search result page, where the target content comprises at least event information related to the target entity object in the target event, and a first multimedia content associated with the target entity object in the target event.

In the second aspect, the present disclosure provides a content search apparatus, including:
a first receiving unit, configured to receive a search keyword, where the search keyword matches with a target entity object, and the target entity object is an entity object corresponding to a target event; and
a first display unit, configured to display various target contents by region on a search result page, where the target content comprises at least event information related to the target entity object in the target event, and a first multimedia content associated with the target entity object in the target event.

In the third aspect, the present disclosure provides an electronic device, including:
a processor; and
a memory, used to store executable instructions,
where the processor is used to read the executable instructions from the memory and execute the executable instructions to achieve the content search method according to the first aspect.

In the fourth aspect, the present disclosure provides a computer-readable storage medium, a computer program is stored on the storage medium, and the computer program, when executed by a processor, causes the processor to achieve the content search method according to the first aspect.

Compared with the existing technology, the technical solutions provided by embodiments of the present disclosure have the following advantages:
the content search method, the content search apparatus, the device, and the medium in the embodiments of the present disclosure can, after receiving a search keyword that matches a target entity object corresponding to a target event, display, based on the search keyword, target contents related to a target entity object in various target events by region on a search result page, such as event information related to the target entity object in the target event and the first multimedia content associated with the target entity object in the target event, so that the displayed target content may not only be closely associated with the target entity object that matches the search keyword, but also be closely associated with the target event corresponding to the target entity object. Thus, abundant timeliness search results, such as the event information and the multimedia content, can be matched for the user based on the search keyword, which not only enables the search results to more conform to the search intention of the user, but also further enriches the search results, thereby improving the search precision and accuracy and also improving the experience of the user.

### BRIEF DESCRIPTION OF THE DRAWINGS

The above and other features, advantages and aspects of various embodiments of the present disclosure will become more apparent when taken in conjunction with the accompanying drawings and with reference to the following detailed description. Throughout the drawings, the same or similar reference numerals represent the same or similar elements. It should be understood that the drawings are schematic and that the components and elements are not necessarily drawn to scale.
FIG. 1 is a schematic flowchart of a content search method provided by an embodiment of the present disclosure;
FIG. 2 is a schematic diagram of a search result page provided by an embodiment of the present disclosure;
FIG. 3 is a schematic diagram of another search result page provided by an embodiment of the present disclosure;
FIG. 4 is a schematic diagram of still another search result page provided by an embodiment of the present disclosure;
FIG. 5 is a schematic diagram of further still another search result page provided by an embodiment of the present disclosure;
FIG. 6 is a schematic diagram of further still another search result page provided by an embodiment of the present disclosure;
FIG. 7 is a schematic structural diagram of a content search apparatus provided by an embodiment of the present disclosure; and
FIG. 8 is a schematic structural diagram of an electronic device provided by an embodiment of the present disclosure.

### DETAILED DESCRIPTION

The embodiments of the present disclosure will be described in more detail below with reference to the accompanying drawings. While certain embodiments of the present disclosure are shown in the drawings, it should be understood that the present disclosure may be embodied in various forms and should not be construed as limited to the embodiments set forth herein. Rather, these embodiments are provided for a thorough and complete understanding of the present disclosure. It should be understood that the drawings and embodiments of the present disclosure are only for exemplary purposes and are not intended to limit the protection scope of the present disclosure.

It should be understood that the various steps described in the method implementations of the present disclosure may be performed in different orders and/or in parallel. Furthermore, the method implementations may include additional steps and/or omit performing the illustrated steps. The protection scope of the present disclosure is not limited in this aspect.

As used herein, the terms "include," "comprise," and variations thereof are open-ended inclusions, i.e., "including but not limited to." The term "based on" is "based, at least in part, on." The term "an embodiment" represents "at least one embodiment," the term "another embodiment" represents "at least one additional embodiment," and the term "some embodiments" represents "at least some embodiments." Relevant definitions of other terms will be given in the description below.

It should be noted that concepts such as the "first," "second," or the like mentioned in the present disclosure are only used to distinguish different devices, modules or units, and are not used to limit the interdependence relationship or the order of functions performed by these devices, modules or units.

It should be noted that the modifications of "a," "an," "a plurality of," and the like mentioned in the present disclosure are illustrative rather than restrictive, and those skilled in the art should understand that unless the context clearly indicates otherwise, these modifications should be understood as "one or more."

The names of messages or information exchanged between multiple devices in the embodiments of the present disclosure are only for illustrative purposes, and are not intended to limit the scope of these messages or information.

In existing search engines, when a user inputs a keyword for information search, displayed search results often do not match the search intention of the user. For example, when the user has a search demand for a hot event with timeliness, such as a major sport event, a special event, or the like, the richness of the search results presented by the existing search engines and the pertinence on the hot event are relatively weak, so that the search results often do not match the search intention of the user, thus affecting the search precision and accuracy and deteriorating the experience of the user.

In order to solve the above problem, the embodiments of the present disclosure provide a content search method, a content search apparatus, a device, and a medium that can synchronize the atmosphere background of main scene requirements for a specific hot event and also stimulate the recommendation with the same content attributes in the context of meeting the main demand of the user.

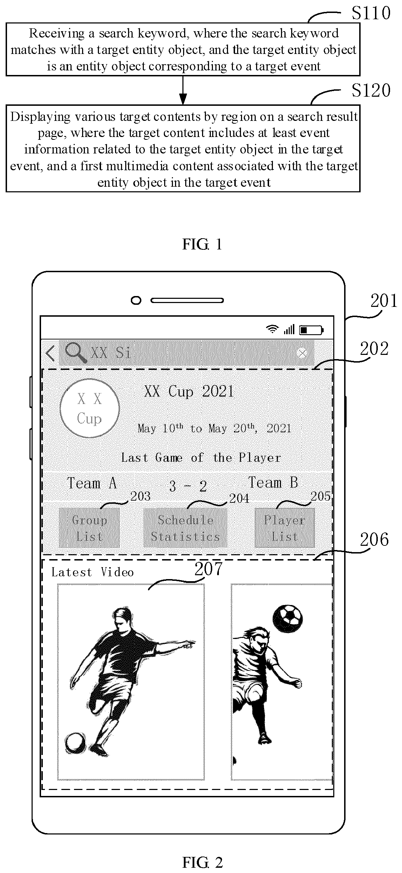

The content search method provided by the embodiments of the present disclosure is firstly described below in combination with FIG. 1 to FIG. 6.

In the embodiments of the present disclosure, the content search method may be performed by an electronic device. Herein, the electronic device may include but not limited to a mobile terminal, such as a mobile phone, a notebook computer, a digital radio broadcasting receiver, a personal digital assistant (PDA), a portable android device (PAD), a portable multimedia player (PMP), a vehicle terminal (e.g., a vehicle navigation terminal), a wearable device, etc., and a fixed terminal, such as a digital television (TV), a desktop computer, a smart home device, etc.

FIG. 1 is a schematic flowchart of a content search method provided by an embodiment of the present disclosure.

As illustrated in FIG. 1, the content search method may include the following steps.

S110, receiving a search keyword, where the search keyword matches with a target entity object, and the target entity object is an entity object corresponding to a target event.

In the embodiments of the present disclosure, the electronic device may receive the search keyword input by the user on a content search page of a specific website or a specific application program.

In some embodiments, the user may input any forms of information (e.g., a text, a voice, an image, etc.) into a search box on the content search page, so that the electronic device uses the text corresponding to the information input by the user as the search keyword input by the user.

For example, the user may input text information "XX Si" into the search box on the content search page, and the electronic device may use "XX Si" as the search keyword to search for a content associated with "XX Si" for the user.

For another example, the user may input voice information "XX Si" into the search box on the content search page, and the electronic device may perform voice recognition processing on the voice information to obtain the search keyword "XX Si" and then search for the content associated with "XX Si" for the user.

For another example, the user may input an image with an "XX Si" text or an image with an "XX Si" picture content into the search box on the content search page, and the electronic device may perform image text recognition processing or image content recognition processing on the image to obtain the search keyword "XX Si" and then search for the content associated with "XX Si" for the user.

In other embodiments, a plurality of candidate keywords may also be displayed on the content search page, and the user may select from the displayed candidate keywords, so that the electronic device can use the candidate keyword selected by the user as the search keyword.

For example, the candidate keywords, such as "XX Si," "XX Er," and "XX Wen" may be displayed on the content search page, and the user may select "XX Si," so that the electronic device may use "XX Si" selected by the user as the search keyword, so as to search for the content associated with "XX Si" for the user.

In the embodiments of the present disclosure, the target entity object may be any entity object.

Herein, the entity object may be an entity corresponding to a person name, an entity corresponding to a TV series name, an entity corresponding to a place name, an entity corresponding to a group name, and all other entities identified by names.

Optionally, the person name may include an actor name, a player name, or the like. The place name may include place names at various levels, such as a city name, a province name, a country name, etc. The group name may include a team name, a company name, or the like.

For example, "XX Si" is a player name, and the entity object corresponding to "XX Si" may be a player. For another example, "Team A" is a team name, and the entity object corresponding to "Team A" may be a team.

In the embodiments of the present disclosure, the target event may be any hot event.

Herein, the hot event may be an event with timeliness and higher popularity, such as a major sport event, a special event, or the like.

Optionally, the target entity object is an entity object corresponding to the target event, that is, an entity object involved in the target event. In other words, the target entity object is an entity object that participates in the target event.

For example, the hot event may be a ball game, "XX Si" may be a player participating in the ball game, and "Team A" may be a team participating in the ball game.

In the embodiments of the present disclosure, the search keyword may match with the target entity object corresponding to the target event.

Specifically, matching the search keyword with the target entity object may include that the name corresponding to the target entity object is exactly the same as the search keyword, or may include that the name corresponding to the target entity object is a result of a fuzzy search on the search keyword.

In the embodiments of the present disclosure, in the case that the search keyword is matched with the target entity object, it may be determined that the search for the search keyword is in a precise demand scene, and S 120 may be performed.

Specifically, after the electronic device receives the search keyword input by the user, the search keyword may be sent to a server, and the server may query whether there is a name of an entity object matched with the search keyword in a keyword library corresponding to a plurality of preset hot events. If it is queried that there is a name of the entity object matched with the search keyword, the entity object to which the queried name of the entity object belongs may be used as the target entity object, and the hot event corresponding to the keyword library to which the queried name of the entity object belongs may be used as the target hot event. Thus, it may be determined that the search keyword is matched with the target entity object corresponding to the target event, that is, the search for the search keyword is in the precise demand scene for the target event, and a search result associated with the search keyword is fed back to the electronic device in the precise demand scene for the target event.

S120, displaying various target contents by region on a search result page, where the target content includes at least event information related to the target entity object in the target event, and a first multimedia content associated with the target entity object in the target event.

In the embodiments of the present disclosure, the search result page may be used to display the search result associated with the search keyword input by the user to the user. Herein, the search result may include the various target contents.

Further, after it is determined that the search keyword matches with the target entity object corresponding to the target event, the server may obtain the various target contents based on the search keyword, and then feed it back to the electronic device, so as to enable the electronic device to display the various target contents in different regions on the search result page.

Specifically, the various target contents may be displayed by region on the search result page, that is, each type of the target content may be displayed in a display region of the search result page, so that the presentation of the search result can be clearer and more aesthetically pleasing, which is convenient for the user to quickly view the target content of the same type, thereby improving the user experience.

In the embodiments of the present disclosure, the target content may be the various contents related to the target entity object in the precise demand scene for the target event.

In some embodiments of the present disclosure, the target content may include event information related to the target entity object in the target event, that is, the event information related to the target entity object in the target event may form a type of the target content.

In some embodiments, the electronic device may directly display the event information related to the target entity object corresponding to the search keyword searched by the user in the target event.

Herein, the event information may include at least one of the following: basic information of the target entity object, activity information of the target entity object, and schedule information of the target entity object.

Further, the activity information may include an activity name, an activity time, information in the activity process, an activity result, or the like, which is not limited here.

The target event as the ball game and the target entity object as the player are taken as an example, the basic information of the target entity object may be basic information of the player, the activity information of the target entity object may be game information of the player, and the schedule information of the target entity object may be game schedule information of the player.

Further, the game information includes a game name, a game time, information in the game process, a game result, or the like, which is not limited here.

In other words, in the case that the target event is a game, the event information may include at least one of the following: basic information of the target entity object, game information of the target entity object, and game schedule information of the target entity object.

In other embodiments, each hot event may involve a plurality of groups, that is, each hot event may be participated in by the plurality of groups. Herein, each group may include a plurality of entity objects.

Correspondingly, the target event may involve the plurality of groups, and each group may include the plurality of entity objects. In this case, the target entity object may belong to a target group in the plurality of groups involved in the target event.

In these embodiments, the electronic device may display event information related to the target group to which the target entity object belongs, corresponding to the search keyword searched by the user, in the target event.

Herein, the event information may include at least one of the following: basic information of the target group to which the target entity object belongs, activity information of the target group, schedule information of the target group, and basic information of other entity objects in the target group except for the target entity object.

Further, the activity information may include an activity name, an activity time, information in the activity process, an activity result, or the like, which is not limited here.

The target event as the ball game and the target entity object as the player are taken as an example, the basic information of the target group may be basic information of the team to which the player belongs, the activity information of the target group may be game information of the team to which the player belongs, the schedule information of the target group may be game schedule information of the team to which the player belongs, and the basic information of other entity objects in the target group may be basic information of other players in the team to which the player belongs.

Further, the game information includes a game name, a game time, information in the game process, a game result, or the like, which is not limited here.

That is, in the case that the target event is a game, the event information may include at least one of the following: basic information of the target group to which the target entity object belongs, game information of the target group, game schedule information of the target group, and basic information of other entity objects in the target group except for the target entity object.

In some other embodiments, in the case that the target event involves the plurality of groups and the target entity object belongs to the target group in the plurality of groups involved in the target event, it may be further determined, based on the search time of the user, whether the event information is information related to the target entity object in the target event or information related to the target group in the target event.

For example, before the start of the target event and after the end of the target event, it may be assumed that the user pays more attention to the target entity object, and the electronic device may display the event information related to the target entity object in the target event. For another example, during the target event, it may be assumed that the user pays more attention to the target group to which the target entity object belongs, and the electronic device may display the event information related to the target group in the target event.

Specifically, after it is determined that the search keyword matches with the target entity object corresponding to the target event, the server may further determine the receiving time of the search keyword. If the receiving time is during the event occurrence period of the target event, it is determined that the event information included in the target content is related to the target group in the target event. If the receiving time is not during the event occurrence period of the target event, it is determined that the event information included in the target content is related to the target entity object in the target event. Then, the server may obtain the corresponding event information as the target content, and feed the target content back to the electronic device, so that the electronic device may display the received event information.

In other embodiments of the present disclosure, the target content may include a first multimedia content associated with the target entity object in the target event, that is, the first multimedia content associated with the target entity object in the target event may form a type of the target content.

Herein, the first multimedia content may include but not limited to at least one of the following: an image, a video, an audio, or the like, which is not limited here.

The target event as the ball game and the target entity object as the player are taken as an example, the first multimedia content may be a multimedia content associated with the player in the ball game. That is, the first multimedia content involves both the ball game and the player.

The target event as the ball game and the target entity object as the team are taken as an example, the first multimedia content may be a multimedia content associated with the team in the ball game. That is, the first multimedia content involves both the ball game and the team.

In some other embodiments of the present disclosure, in the case that the target event involves the plurality of groups, each group includes the plurality of entity objects, and the target entity object belongs to the target group in the plurality of groups involved in the target event, the target content may also include a second multimedia content associated with the target group in the target event, that is, the second multimedia content associated with the target group in the target event may form a type of the target content.

Herein, the second multimedia content may include but not limited to at least one of the following: an image, a video, an audio, or the like, which is not limited here

The target event as the ball game and the target entity object as the player are taken as an example, the second multimedia content may be a multimedia content associated with the team to which the player belongs in the ball game. That is, the second multimedia content involves both the ball game and the team to which the player belongs.

Specifically, the second multimedia content may include the multimedia content related to a team winning highlight, a team performance, a team schedule prompt, or the like.

In some other embodiments of the present disclosure, the target content may also include a social account of the target entity object on the specific application program or specific website for the user to follow its dynamics, that is, the social account of the target entity object on the specific application program or specific website may form a type of the target content.

In some other embodiments of the present disclosure, in the case that the target event involves the plurality of groups, each group includes the plurality of entity objects, and the target entity object belongs to the target group in the plurality of groups involved in the target event, the target content may also include a social account of other entity objects in the target group (except for the target entity object) on the specific application program or specific website for the user to follow its dynamics. That is, the social account of other entity objects in the target group on the specific application program or specific website may form a type of the target content.

Therefore, the various target contents mentioned above may be displayed in respective regions on the search result page for the convenience of the user to view.

In the embodiments of the present disclosure, after the search keyword that matches with the target entity object corresponding to the target event is received, based on the search keyword, the target content related to the target entity object in various target events, such as the event information related to the target entity object in the target event and the first multimedia content associated with the target entity object in the target event, is displayed in respective regions on the search result page, so that the target content displayed is not only associated closely with the target entity object that matches with the search keyword, but also associated closely with the target event corresponding to the target entity object. Thus, based on the search keyword, abundant timeliness search results, such as the event information and the multimedia content, can be matched for the user, which not only enables the search results to more conform to the search intention of the user, but also further enriches the search results, thereby improving the search precision and accuracy and also improving the experience of the user.

In another implementation of the present disclosure, in order to further improve the user experience, the electronic device may display the corresponding target content in each display region on the search result page according to the corresponding display mode of the each display region.

In some embodiments of the present disclosure, in the case that the target content includes the event information related to the target entity object in the target event, S 120 may specifically include:
displaying the event information and a target control in a first display region of the search result page.

Herein, the first display region may be any display region of the search result page. For example, the first display region may be a top display region or a left display region of the search result page, which is not limited here.

Optionally, the target control may be used to trigger display of extended information for the target event on an information display page.

Herein, the user may trigger the target control, so that the electronic device is jumped from the search result page to the information display page and displays the extended information for the target event on the information display page.

Further, the extended information for the target event may include other information in the target event except for the event information related to the target entity object. For example, the extended information for the target event may include at least one of the following: historical activity information of the target event, complete schedule information of the target event, basic information of all groups involved in the target event, and basic information of all entity objects involved in the target event.

The target event as the ball game is taken as an example, the historical activity information of the target event may be a historical result of the ball game, the complete schedule information of the target event may be a complete game schedule of the ball game, the basic information of all groups involved in the target event may be basic information of all teams participating in the ball game, and the basic information of all entity objects involved in the target event may be basic information of all players from each of the teams participating in the ball game.

In these embodiments, the server may also feed back, based on the search keyword, a page address corresponding to the information display page and target anchor information. Herein, the target anchor information may include anchor information corresponding to the target entity object and/or anchor information corresponding to the target group. The user may trigger the target control, so that the electronic device is jumped from the search result page to the information display page corresponding to the page address, displays the extended information for the target event on the information display page, and specifically displays an information portion corresponding to the target anchor information in the extended information. This information portion may include an information content corresponding to the target entity object and/or the target group in the target event.

FIG. 2 shows a schematic diagram of a search result page provided by an embodiment of the present disclosure

As illustrated in FIG. 2, the electronic device 201 may display the search result page searching for "XX Si," and herein "XX Si" is a player of a participating team "Team A" in an "XX Cup 2021" ball game. In the top display region 202 of the search result page, game information related to the participating team "Team A" to which the player "XX Si" belongs in the "XX Cup 2021" ball game is displayed, such as a game name "XX Cup 2021," a game event "May 10th to May 20th, 2021," a game type "the last game of this player," and a game result "Team A 3-2 Team B." In the top display region 202 of the search result page, a "group list" control 203, a "schedule statistics" control 204, and a "player list" control 205 are also displayed.

Herein, the "group list" control 203 is used to trigger display of a group list of each group in the "XX Cup 2021" ball game on a group list page. The "schedule statistics" control 204 is used to trigger display of all schedule arrangements for the "XX Cup 2021" ball game on a schedule statistics page, and the "player list" control 205 is used to trigger display of players from each of the teams participating in the "XX Cup 2021" ball game on a player list page.

In the embodiments of the present disclosure, optionally, a background image of the first display region may be determined according to an event identification feature of the target event, that is, the background image of the first display region may be generated according to the event identification feature of the target event.

Herein, an event identifier of the target event may be a pattern identifier (LOGO) of the target event. Further, the event identification feature of the target event may include at least one of the following: a pattern feature or a color feature of the event identifier.

The event identification feature of the target event, including the pattern feature of the event identifier, is taken as an example, the background image of the first display region may include a pattern content of the event identifier.

The event identification feature of the target event, including the color feature of the event identifier, is taken as an example, the color of the background image of the first display region may be the same as a main color of the event identifier.

Therefore, in the embodiments of the present disclosure, the feature of the target event may be reflected on the search result page in the precise demand scene for the target event, and the search intention of the user is combined with the atmosphere of the event scene, thereby further improving the experience of the user.

In other embodiments of the present disclosure, in the case that the target content includes the first multimedia content associated with the target entity object in the target event, S 120 may specifically include:
displaying the first multimedia content in a horizontal arrangement according to a first multimedia order in a second display region of the search result page.

Herein, the second display region may be any display region of the search result page, which is not limited here.

For example, in the case that the first display region is the top display region of the search result page, the second display region may be a display region located below the top display region.

When the number of the first multimedia contents is multiple, the electronic device may display a plurality of first multimedia contents in a horizontal arrangement in the second display region according to the first multimedia order.

Optionally, the first multimedia order may be determined according to an attribute of the first multimedia content and/or a correlation between the first multimedia content and the target entity object.

The attribute of the first multimedia content may include a publication time, an interaction popularity, or the like, which is not limited here.

For example, in the case that the first multimedia order is determined according to the attribute of the first multimedia content, if the attribute of the first multimedia content includes the publication time, the first multimedia order may be in the order of time from near to far; and if the attribute of the first multimedia content includes the interaction popularity, the first multimedia order may be in the order of popularity from high to low.

The correlation between the first multimedia content and the target entity object may be determined according to a degree of correlation between the multimedia content and the target entity object, or the number of times the target entity object is mentioned in comment information of the multimedia content, or the like, which is not limited here.

For example, in the case that the first multimedia order is determined according to the correlation between the first multimedia content and the target entity object, if the correlation between the first multimedia content and the target entity object is determined according to the degree of correlation between the multimedia content and the target entity object, the degree of correlation between the multimedia content and the target entity object may be identified by the multimedia content recognition technology, the degree of correlation is higher, and the correlation is higher, so that the first multimedia order is set as an order of the degree of correlation from high to low; and if the correlation between the first multimedia content and the target entity object is determined according to the number of times the target entity object is mentioned in the comment information of the multimedia content, the target entity object is mentioned more times, and the correlation is higher, so that the first multimedia order is set as an order of the number of times the target entity object is mentioned in the comment information from high to low.

The target event as the ball game and the target entity object as the player are taken as an example, if the correlation between the first multimedia content and the player is determined according to the degree of correlation between the multimedia content and the player, the degree of correlation between the player and the multimedia content related to an exciting moment of the player in the game is higher than that between the player and a multimedia content related to the off-field news (e.g., a halftime break, a post-game interview, or the like) of the player, and the degree of correlation for the multimedia content related to the off-field news of the player is higher than that for a video related to the latest development of the team to which the player belongs.

Further, in the case that the first multimedia order may be determined according to the attribute of the first multimedia content and the correlation between the first multimedia content and the target entity object, the order of the first multimedia content may be preferentially determined according to the correlation between the first multimedia content and the target entity object, and when a plurality of first multimedia contents have the same correlation with the target entity object, the order of the plurality of first multimedia contents with the same correlation may be determined according to the attribute of the first multimedia content, so as to obtain the first multimedia order.

Continued to refer to FIG. 2, a latest video display region 206 may be displayed below the top display region 202 of the search result page, and a small video 207 related to the player "XX Si" in the "XX Cup 2021" ball game may be displayed in the latest video display region 206.

In some embodiments, bullet-screen information may also be displayed on the first multimedia content according to a preset presentation mode.

In one example, the bullet-screen information may be displayed on each first multimedia content displayed on the search result page. In another example, the bullet-screen information may be displayed on the first complete first multimedia content displayed on the search result page.

Optionally, the preset presentation mode may include circularly displaying within one or more rows, circularly displaying within a plurality of rows and displaying the bullet-screen information corresponding to a publisher attribute in each row, circularly displaying within one or more columns, circularly displaying within a plurality of columns and displaying the bullet-screen information corresponding to a publisher attribute in each column, or the like, which is not limited here.

Herein, the publisher attribute may be a user attribute possessed by a publisher of the bullet-screen information. The user attribute may be determined according to an identity of the publisher. For example, the identity of the publisher may include an age group of the publisher, a region of the publisher, a support party of the publisher, or the like, which is not limited here.

In these embodiments, the bullet-screen information may be used to display a comment content for the first multimedia content displaying the bullet-screen information.

Further, the display mode of the bullet-screen information may be determined according to the publisher attribute of the bullet-screen information. Herein, the display modes of the bullet-screen information corresponding to different publisher attributes are different.

Optionally, the display mode of the bullet-screen information may include a bullet-screen background color, a bullet-screen text font, a bullet-screen font color, a bullet-screen border pattern, or the like, which is not limited here.

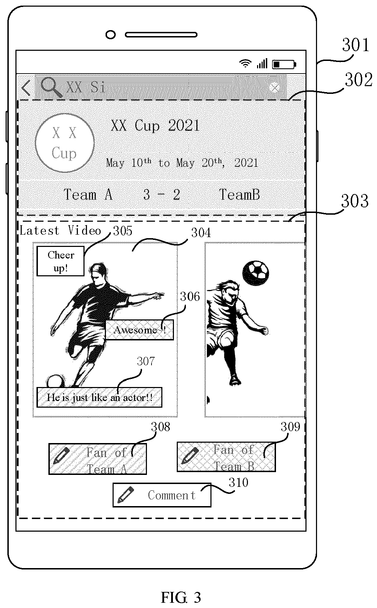

FIG. 3 shows a schematic diagram of another search result page provided by an embodiment of the present disclosure.

As illustrated in FIG. 3, the electronic device 301 may display the search result page searching for "XX Si," and herein "XX Si" is a player from the participating team "Team A" in the "XX Cup 2021" ball game. In the top display region 302 of the search result page, game information related to the participating team "Team A" to which the player "XX Si" belongs in the "XX Cup 2021" ball game is displayed. Below the top display region 302, a latest video display region 303 may be displayed. In the latest video display region 303, a small video 304 related to the player "XX Si" in the "XX Cup 2021" ball game may be displayed. Herein, the bullet-screen information for the small video 304 is displayed on the small video 304 which is firstly displayed in completeness.

Herein, the publisher attribute of first bullet-screen information 305 may be a passerby, that is, the publisher of the first bullet-screen information 305 does not support any teams. In this case, the background color of the first bullet-screen information 305 may be white. The publisher attribute of the second bullet-screen information 306 may be a fan of Team B. In this case, the background color of the second bullet-screen information 306 may be blue. The publisher attribute of the third bullet-screen information 307 may be a fan of Team A. In this case, the background color of the third bullet-screen information 307 may be red.

Further, the bullet-screen information displayed on the small video 304 may be circularly displayed in a plurality of rows, and the bullet-screen information corresponding to one publisher attribute is displayed in each row. For example, the first row may display the bullet-screen information published by the passerby, such as the first bullet-screen information 305, the second row may display the bullet-screen information published by the fan of Team B, such as the second bullet-screen information 306, and the third row may display the bullet-screen information published by the fan of Team A, such as the third bullet-screen information 307.

In some other embodiments of the present disclosure, in the case that the target content includes the second multimedia content related to the target group in the target event, S 120 may specifically include:
displaying the second multimedia content in a horizontal arrangement according to a second multimedia order in a third display region of the search result page.

Herein, the third display region may be any display region of the search result page, which is not limited here.

For example, in the case that the first display region is the top display region of the search result page and the second display region is the display region located below the top display region, the third display region may be a display region below the second display region.

When the number of the second multimedia contents is multiple, the electronic device may display a plurality of second multimedia contents horizontally in the third display region according to the second multimedia order.

Optionally, the second multimedia order may be determined according to an attribute of the second multimedia content and/or a correlation between the second multimedia content and the target group.

It should be noted that a method for determining the second multimedia order is similar to a method for determining the first multimedia order, and details are not repeatedly described here.

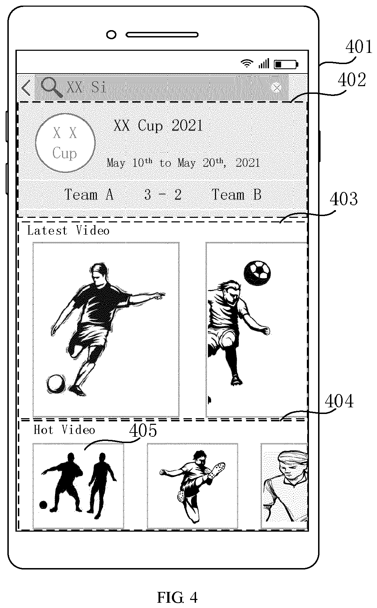

FIG. 4 shows a schematic diagram of still another search result page provided by an embodiment of the present disclosure.

As illustrated in FIG. 4, the electronic device 401 may display the search result page searching for "XX Si," and herein "XX Si" is a player of the participating team "Team A" in the "XX Cup 2021" ball game. In the top display region 402 of the search result page, game information related to the participating team "Team A" to which the player "XX Si" belongs in the "XX Cup 2021" ball game is displayed. Below the top display region 402, a latest video display region 403 may be displayed, and a small video related to the player "XX Si" in the "XX Cup 2021" ball game may be displayed in the latest video display region 403. Below the latest video display region 403, a hot video display region 404 may be displayed, and a small video 405 related to the participating team "Team A" in the "XX Cup 2021" ball game may be displayed in the hot video display region 404.

In some other embodiments of the present disclosure, in the case that the target content includes the social account of the target entity object on the specific application program or specific website, S120 may specifically include:
displaying a social account of the target entity object in a fourth display region of the search result page.

Herein, the fourth display region may be any display region of the search result page, which is not limited here.

For example, in the case that the first display region is the top display region of the search result page and the second display region is the display region located below the top display region, the fourth display region may be located between the first display region and the second display region.

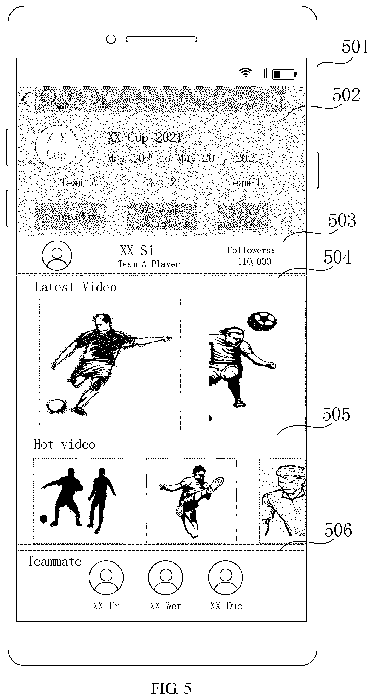

FIG. 5 shows a schematic diagram of further still another search result page provided by an embodiment of the present disclosure.

As illustrated in FIG. 5, the electronic device 501 may display the search result page searching for "XX Si," and herein "XX Si" is a player of the participating team "Team A" in the "XX Cup 2021" ball game. In the top display region 502 of the search result page, game information related to the participating team "Team A" to which the player "XX Si" belongs in the "XX Cup 2021" ball game is displayed. In the top display region 502, the "group list" control, the "schedule statistics" control, and the "player list" control are also displayed. Below the top display region 502, a personal account display region 503 may be displayed, and a social account of the player "XX Si" on the website may be displayed in the personal account display region 503. Below the personal account display region 503, the latest video display region 504 may be displayed, and a small video related to the player "XX Si" in the "XX Cup 2021" ball game may be displayed in the latest video display region 504. Below the latest video display region 504, a hot video display region 505 may be displayed, and a small video related to the participating team "Team A" in the "XX Cup 2021" ball game may be displayed in the hot video display region 505.

In some other embodiments of the present disclosure, in the case that the target content includes social accounts of other entity objects in the target group on the specific application program or specific website, S120 may specifically include:
displaying social accounts of other entity objects in the target group in a fifth display region of the search result page.

Herein, the fifth display region may be any display region of the search result page, which is not limited here.

For example, in the case that the first display region is the top display region of the search result page and the second display region is located below the top display region, the fifth display region may be a display region below the second display region.

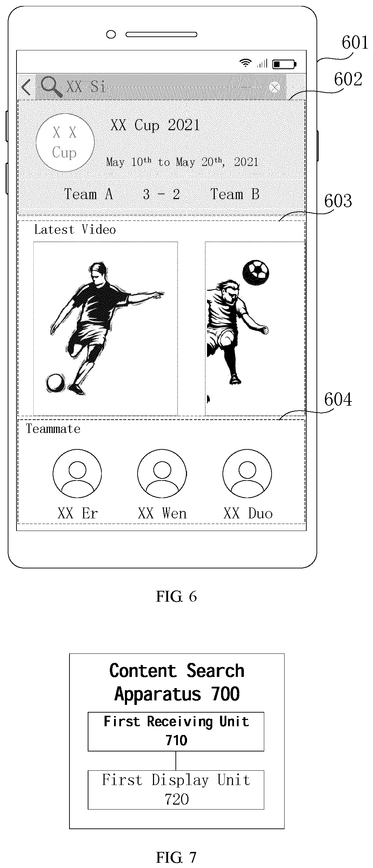

FIG. 6 shows a schematic diagram of further still another search result page provided by an embodiment of the present disclosure.

As illustrated in FIG. 6, the electronic device 601 may display the search result page searching for "XX Si," and herein "XX Si" is a player of the participating team "Team A" in the "XX Cup 2021" ball game. In the top display region 602 of the search result page, game information related to the participating team "Team A" to which the player "XX Si" belongs in the "XX Cup 2021" ball game is displayed. Below the top display region 602, the latest video display region 603 may be displayed, and a small video related to the player "XX Si" in the "XX Cup 2021" ball game may be displayed in the latest video display region 603. Below the latest video display region 603, a teammate account display region 604 may be displayed, and social accounts of teammates who participate in the "XX Cup 2021" ball game with the player "XX Si" may be displayed in the teammate account display region 604.

For another example, in the case that the first display region is the top display region of the search result page, the second display region is the display region below the top display region, and the third display region is the display region below the second display region, the fifth display region may be a display region below the third display region.

Continued to refer to FIG. 5, a teammate account display region 506 may be displayed below the hot video display region 505, and social accounts of teammates who participate in the "XX Cup 2021" ball game with the player "XX Si" may be displayed in the teammate account display region 506.

In another implementation of the present disclosure, in order to further improve the user experience, a simpler and more convenient page operating mode may also be provided for the user.

In some embodiments of the present disclosure, in the case that the target content includes the first multimedia content related to the target entity object in the target event and the bullet-screen information is displayed on the first multimedia content in the preset presentation mode, a plurality of comment controls may also be displayed on the search result page. Herein, the comment control may be used to publish the bullet-screen information for the target multimedia content in the first multimedia content, and the comment content for the target multimedia content may be carried in the bullet-screen information.

Optionally, the plurality of comment controls may be displayed in the same display region with the first multimedia content, that is, the plurality of comment controls and the first multimedia content may be displayed in the same display region.

Optionally, each comment control belongs to one publisher attribute. When the user publishes the bullet-screen information by different comment controls, the bullet-screen information may have different publisher attributes. That is, when the user publishes the bullet-screen information by one of the comment controls, the bullet-screen information may have the publisher attribute to which the comment control used by the user belongs.

Continued to refer to FIG. 3, the plurality of comment controls may also be displayed below the small video 304 displayed in the latest video display region 303. Herein, the first comment control 308 may have the publisher attribute of the fan of Team A, and therefore, the display mode and display position of the bullet-screen information published by the user through the first comment control 308 may be the same as the display mode and display position of the third bullet-screen information 307. The second comment control 309 may have the publisher attribute of the fan of Team B, and therefore, the display mode and display position of the bullet-screen information published by the user through the second comment control 309 may be the same as the display mode and display position of the second bullet-screen information 306. The third comment control 310 may have the publisher attribute of the passerby, and therefore, the display mode and display position of the bullet-screen information published by the user through the third comment control 310 may be the same as the display mode and display position of the first bullet-screen information 305.

Further, after S120, the content search method may further include the following steps:
receiving a comment operation for a target comment control in the plurality of comment controls;
in response to the comment operation, determining a target display mode corresponding to target bullet-screen information according to a target publisher attribute to which the target comment control belongs, where the target bullet-screen information is used to display a target comment content input by the comment operation for a target multimedia content in the first multimedia content; and
displaying the target bullet-screen information on the target multimedia content according to the preset presentation mode and the target display mode.

Herein, the comment operation may include a gesture control operation, a voice control operation, and other operations on the target comment control which are used to input the target comment content for the target multimedia content and trigger publication of the target bullet-screen information used to display the target comment content within the target multimedia content, which is not limited here.

Optionally, the target comment control may be any comment control in the plurality of comment controls, which is not limited here.

In one example, the target multimedia content may be a multimedia content selected by the user in the first multimedia content. In another example, the target multimedia content may be a multimedia content which is firstly displayed in completeness in the first multimedia content.

Specifically, after the electronic device detects the comment operation for the target comment control, the electronic device may firstly use the display mode corresponding to the target publisher attribute as the target display mode corresponding to the target bullet-screen information according to the target publisher attribute to which the target comment control belongs, and then, according to the preset presentation mode and target display mode, the target bullet-screen information may be displayed on the target multimedia content.

Continued to refer to FIG. 3, after the user inputs the comment operation on the first comment control 308, the electronic device may determine that the bullet-screen information to be published is the bullet-screen information for the first completely-displayed small video 304, and the publisher attribute of the bullet-screen information to be published is the fan of Team A. Therefore, the bullet-screen information to be published may be displayed in a third row of a bullet-screen queue in the first completely-displayed small video 304, and the background color of the bullet-screen information to be published may be red.

In other embodiments of the present disclosure, in the case that the search result page includes at least one of the second display region and the third display region, after S 120, the content search method may further include the following steps:
in response to detecting a first triggering operation on the search result page, updating a multimedia content displayed in a first target display region according to an operation direction of the first triggering operation and a multimedia order corresponding to the first target display region operated by the first triggering operation.

Herein, the first target display region may be any one display region of the second display region and the third display region.

Optionally, the first triggering operation may include a gesture control operation, a voice control operation, a facial expression control operation and other operations on the first target display region which are used to control the display content in the first target display region to slide horizontally, which is not limited here.

For example, when the electronic device detects the first triggering operation on the second display region of the search result page, if the first triggering operation is used to control the display content in the second display region to slide horizontally to the left, then the multimedia content adjacent to the last-displayed multimedia content may be displayed sequentially in the second display region according to the first multimedia order, as to achieve display of the hidden multimedia content.

In some other embodiments of the present disclosure, in the case that the search result page includes at least one of the second display region and the third display region, after S 120, the content search method may further include the following steps:
in response to detecting a second triggering operation on the search result page, playing a multimedia content displayed completely in a second target display region sequentially according to a multimedia order corresponding to the second target display region operated by the second triggering operation.

Herein, the second target display region may be any one display region of the second display region and the third display region.

Optionally, the second triggering operation may include a gesture control operation, a voice control operation, a facial expression control operation and other operations on the second target display region which are used to control the display content in the second target display region to slide horizontally, or may include a gesture control operation, a voice control operation, a facial expression control operation and other operations on the second target display region which are used to select the second target display region, which is not limited here.

For example, when the electronic device detects the second triggering operation on the second display region of the search result page, if the second triggering operation is used to control the display content in the second display region to slide horizontally to the left, then the multimedia content adjacent to the last-displayed multimedia content may be displayed sequentially in the second display region according to the first multimedia order, and in the process of updating the multimedia content displayed in the second display region, the electronic device may play the multimedia content displayed completely in the second display region in sequence according to the first multimedia order.

Optionally, when any multimedia content in the second target display region is at least partially slid out of the second target display region in the process of playing, the multimedia content stops playing, and the electronic device may record a playing progress of the multimedia content when the multimedia content stops playing, and when the multimedia content re-enters the second target display region and is displayed completely, the multimedia content is continued to play based on the playing progress.

In some other embodiments of the present disclosure, in the case that the target content includes the event information related to the target entity object in the target event, the target control may be displayed in the first display region of the search result page, and the target control is used to trigger display of extended information for the target event on the information display page.

Herein, in the case that a plurality of target controls are displayed in the first display region, respective target controls may correspond to different information display pages and different extended information for the target event.

Further, after S120, the content search method may further include the following steps:
in response to detecting a third triggering operation on any target control, the electronic device may display an information portion corresponding to the target entity object and/or target group in the extended information for the target event corresponding to the target control on the information display page corresponding to the target control.

Herein, the third triggering operation may include a gesture control operation (such as clicking, long-pressing, double-clicking, or the like), a voice control operation, a facial expression control operation, or other operations on the target control, which is not limited here.

Specifically, when the electronic device detects the third triggering operation on any target control, according to the page address corresponding to the triggered target control and the target anchor information, it may be jumped from display of the search result page to display of the information display page corresponding to the page address, and the display position corresponding to the target anchor information may be found on the information display page, as to display the information portion corresponding to the target entity object and/or the target group in the extended information for the target event corresponding to the target control on the information display page.

Continued to refer to FIG. 2, when the user clicks on the "group list" control 203, the electronic device may be jumped to the group list page and located to a grouping list of a group to which the participating team "Team A" belongs in the grouping list of each group on the group list page for display.

In conclusion, the content search method provided by the embodiments of the present disclosure not only enables the search results to better match with the search intention of the user and to be more abundant, but also synchronizes the atmosphere background of the precise demand scene. At the same time, the good interaction experience may also be provided for the user.

An embodiment of the present disclosure further provides a content search apparatus, which is described below in combination with FIG. 7.

In the embodiments of the present disclosure, the content search apparatus may be an electronic device. Herein, the electronic device may include but not limited to a mobile terminal (e.g., a mobile phone, a notebook computer, a digital radio broadcasting receiver, PDA, PAD, PMP, a vehicle terminal (such as a vehicle navigation terminal), a wearable device, etc.), and a fixed terminal (e.g., a digital TV, a desktop computer, a smart home device, etc.).

FIG. 7 shows a schematic structural diagram of a content search apparatus provided by an embodiment of the present disclosure.

As illustrated in FIG. 7, the content search apparatus 700 may include a first receiving unit 710 and a first display unit 720.

The first receiving unit 710 may be configured to receive a search keyword, where the search keyword matches with a target entity object, and the target entity object is an entity object corresponding to a target event.

The first display unit 720 may be configured to display various target contents by region on a search result page, where the target content includes at least event information related to the target entity object in the target event, and a first multimedia content associated with the target entity object in the target event.

In the embodiments of the present disclosure, the content search apparatus can, after receiving a search keyword that matches a target entity object corresponding to a target event, display, based on the search keyword, target contents related to a target entity object in various target events by region on a search result page, such as event information related to the target entity object in the target event and the first multimedia content associated with the target entity object in the target event, so that the displayed target content may not only be closely associated with the target entity object that matches the search keyword, but also be closely associated with the target event corresponding to the target entity object. Thus, abundant timeliness search results, such as the event information and the multimedia content, can be matched for the user based on the search keyword, which not only enables the search results to more conform to the search intention of the user, but also further enriches the search results, thereby improving the search precision and accuracy and also improving the experience of the user.

In some embodiments of the present disclosure, the target event may involve a plurality of groups, and each group may include a plurality of entity objects.

Herein, the event information may include at least one of the following: basic information of the target group to which the target entity object belongs, game information of the target group, schedule information of the target group, and basic information of other entity objects in the target group except for the target entity object.

In some embodiments of the present disclosure, bullet-screen information may be displayed on the first multimedia content according to a preset presentation mode, a display mode of the bullet-screen information is determined according to a publisher attribute of the bullet-screen information, and the bullet-screen information is used to display a comment content for the first multimedia content.

In some embodiments of the present disclosure, a plurality of comment controls may further be displayed on the search result page, the plurality of comment controls and the first multimedia content may be displayed in an identical region, and each of the comment controls belongs to one publisher attribute.

Herein, the content search apparatus 700 may further include a second receiving unit, an operation response unit, and a second display unit.

The second receiving unit may be configured to, after displaying the various target contents by region, receive a comment operation for a target comment control in the plurality of comment controls.

The operation response unit may be configured to, in response to the comment operation, determine a target display mode corresponding to target bullet-screen information according to a target publisher attribute to which the target comment control belongs, where the target bullet-screen information is used to display a target comment content input by the comment operation for a target multimedia content in the first multimedia content.

The second display unit may be configured to display the target bullet-screen information on the target multimedia content according to the preset presentation mode and the target display mode.

In some embodiments of the present disclosure, the first display unit 720 may be further configured to display the event information and a target control in a first display region of the search result page.

Herein, a background image of the first display region may be determined according to an event identification feature of the target event, and the target control may be used to trigger display of extended information for the target event on an information display page.

In some embodiments of the present disclosure, the first display unit 720 may be further configured to display the first multimedia content in a horizontal arrangement according to a first multimedia order in a second display region of the search result page.

Herein, the first multimedia order is determined according to an attribute of the first multimedia content and/or a correlation between the first multimedia content and the target entity object.

In some embodiments of the present disclosure, the target content may further include a second multimedia content associated with the target group in the target event.

In some embodiments of the present disclosure, the first display unit 720 may be further configured to display the second multimedia content in a horizontal arrangement according to a second multimedia order in a third display region of the search result page.

Herein, the second multimedia order is determined according to an attribute of the second multimedia content and/or a correlation between the second multimedia content and the target group.

In some embodiments of the present disclosure, the content search apparatus 700 may further include a third display unit, and the third display unit may be configured to, after displaying the various target contents by region, in response to detecting a first triggering operation on the search result page, update a multimedia content displayed in a first target display region according to an operation direction of the first triggering operation and a multimedia order corresponding to the first target display region operated by the first triggering operation.

In some embodiments of the present disclosure, the content search apparatus 700 may further include a fourth display unit, and the fourth display unit may be configured to, after displaying the various target contents by region, in response to detecting a second triggering operation on the search result page, playing a multimedia content displayed completely in a second target display region sequentially according to a multimedia order corresponding to the second target display region operated by the second triggering operation.

It should be noted that the content search apparatus 700 shown in FIG. 7 may perform various steps in the embodiments of the method as shown in FIG. 1 to FIG. 6, and achieve various processes and effects in the embodiments of the method as shown in FIG. 1 to FIG. 6, and details are not repeatedly described here.

An embodiment of the present disclosure further provides an electronic device, the electronic device may include a processor and a memory, and the memory may be used to store executable instructions. Herein, the processor may be used to read the executable instructions from the memory and execute the executable instructions to achieve the content search method in the above embodiments.

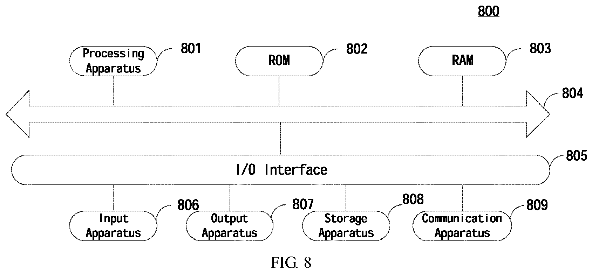

FIG. 8 shows a schematic structural diagram of an electronic device provided by an embodiment of the present disclosure. In the following, specifically with reference to FIG. 8, FIG. 8 illustrates a schematic structural diagram of an electronic device 800 suitable for implementing some embodiments of the present disclosure.

The electronic device 800 in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable device, or the like, and fixed terminals such as a digital TV, a desktop computer, a smart home device, or the like.

It should be noted that, the electronic device 800 illustrated in FIG. 8 is merely an example, and should not pose any limitation to the functions and the range of use of the embodiments of the present disclosure.

As illustrated in FIG. 8, the electronic device 800 may include a processing apparatus 801 (e.g., a central processing unit, a graphics processing unit, etc.), which can perform various suitable actions and processing according to a program stored in a read-only memory (ROM) 802 or a program loaded from a storage apparatus 808 into a random access memory (RAM) 803. The RAM 803 further stores various programs and data required for operations of the electronic device 800. The processing apparatus 801, the ROM 802, and the RAM 803 are interconnected by means of a bus 804. An input/output (I/O) interface 805 is also connected to the bus 804.

Usually, the following apparatus may be connected to the I/O interface 805: an input apparatus 806 including, for example, a touch screen, a touch pad, a keyboard, a mouse, a camera, a microphone, an accelerometer, a gyroscope, or the like; an output apparatus 807 including, for example, a liquid crystal display (LCD), a loudspeaker, a vibrator, or the like; a storage apparatus 808 including, for example, a magnetic tape, a hard disk, or the like; and a communication apparatus 809. The communication apparatus 809 may allow the electronic device 800 to be in wireless or wired communication with other devices to exchange data. While FIG. 8 illustrates the electronic device 800 having various apparatuses, it should be understood that not all of the illustrated apparatuses are necessarily implemented or included. More or fewer apparatuses may be implemented or included alternatively.

An embodiment of the present disclosure further provides a computer-readable storage medium, a computer program is stored on the storage medium, and the computer program, when executed by a processor, causes the processor to achieve the content search method in the above embodiments.

Particularly, according to the embodiments of the present disclosure, the processes described above with reference to the flowchart may be implemented as a computer software program. For example, some embodiments of the present disclosure include a computer program product, which includes a computer program carried by a non-transitory computer-readable medium. The computer program includes program codes for performing the method shown in the flowchart. In such embodiments, the computer program may be downloaded online through the communication apparatus 809 and installed, or may be installed from the storage apparatus 808, or may be installed from the ROM 802. When the computer program is executed by the processing apparatus 801, the above-mentioned functions defined in the content search method in the embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program codes contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-described computer-readable medium may be included in the above-described electronic device, or may also exist alone without being assembled into the electronic device.

The above-described computer-readable medium carries one or more programs, and when the one or more programs are executed by the electronic device, the electronic device is caused to:
receive a search keyword, where the search keyword matches with a target entity object, and the target entity object is an entity object corresponding to a target event; and display various target contents by region on a search result page, where the target content includes at least event information related to the target entity object in the target event, and a first multimedia content associated with the target entity object in the target event.

In the embodiments of the present disclosure, the computer program codes for performing the operations of the present disclosure may be written in one or more programming languages or a combination thereof. The above-described programming languages include but are not limited to object-oriented programming languages such as Java, Smalltalk, C++, and also include conventional procedural programming languages such as the "C" programming language or similar programming languages. The program codes may by executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flow chart and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units involved in the embodiments of the present disclosure may be implemented in software or hardware. Among them, the name of the unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

The foregoing are merely descriptions of the preferred embodiments of the present disclosure and the explanations of the technical principles involved. It should be understood by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the scope of the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method actions, it should be understood that the subject matter defined in the appended claims is not necessarily limited to the particular features and actions described above. Rather, the particular features and actions described above are merely exemplary forms for implementing the claims.

## Claims

1. A content search method, **characterized in** comprising:
receiving a search keyword, wherein the search keyword matches with a target entity object, and the target entity object is an entity object corresponding to a target event; and
displaying various target contents by region on a search result page, wherein the target content comprises at least event information related to the target entity object in the target event, and a first multimedia content associated with the target entity object in the target event.

2. The method according to claim 1, wherein the target event involves a plurality of groups, and each of the groups comprises a plurality of entity objects,
wherein the event information comprises at least one of:
basic information of a target group to which the target entity object belongs,
game information of the target group,
game schedule information of the target group, or
basic information of other entity objects in the target group except for the target entity object.

3. The method according to claim 1, wherein bullet-screen information is displayed on the first multimedia content according to a preset presentation mode, a display mode of the bullet-screen information is determined according to a publisher attribute of the bullet-screen information, and the bullet-screen information is used to display a comment content for the first multimedia content.

4. The method according to claim 3, wherein a plurality of comment controls are further displayed on the search result page, the plurality of comment controls and the first multimedia content are displayed in an identical region, and each of the comment controls belongs to one publisher attribute,
wherein, after displaying the various target contents by region on the search result page, the method further comprises:
receiving a comment operation for a target comment control in the plurality of comment controls;
in response to receiving the comment operation, determining a target display mode corresponding to target bullet-screen information according to a target publisher attribute to which the target comment control belongs, wherein the target bullet-screen information is used to display a target comment content input by the comment operation for a target multimedia content in the first multimedia content; and
displaying the target bullet-screen information on the target multimedia content according to the preset presentation mode and the target display mode.

5. The method according to claim 1, wherein displaying the various target contents by region on the search result page comprises:
displaying the event information and a target control in a first display region of the search result page,
wherein a background image of the first display region is determined according to an event identification feature of the target event, and the target control is used to trigger display of extended information for the target event on an information display page.

6. The method according to claim 1, wherein displaying the various target contents by region on the search result page comprises:
displaying the first multimedia content in a horizontal arrangement according to a first multimedia order in a second display region of the search result page,
wherein the first multimedia order is determined according to an attribute of the first multimedia content and/or a correlation between the first multimedia content and the target entity object.

7. The method according to claim 2, wherein the target content further comprises a second multimedia content associated with the target group in the target event.

8. The method according to claim 7, wherein displaying the various target contents by region on the search result page comprises:
displaying the second multimedia content in a horizontal arrangement according to a second multimedia order in a third display region of the search result page,
wherein the second multimedia order is determined according to an attribute of the second multimedia content and/or a correlation between the second multimedia content and the target group.

9. The method according to claim 6 or 8, wherein, after displaying the various target contents by region on the search result page, the method further comprises:
in response to detecting a first triggering operation on the search result page, updating a multimedia content displayed in a first target display region according to an operation direction of the first triggering operation and a multimedia order corresponding to the first target display region operated by the first triggering operation.

10. The method according to claim 6 or 8, wherein, after displaying the various target contents by region on the search result page, the method further comprises:
in response to detecting a second triggering operation on the search result page, playing a multimedia content displayed completely in a second target display region sequentially according to a multimedia order corresponding to the second target display region operated by the second triggering operation.

11. A content search apparatus, **characterized in** comprising:
a first receiving unit, configured to receive a search keyword, wherein the search keyword matches with a target entity object, and the target entity object is an entity object corresponding to a target event; and
a first display unit, configured to display various target contents by region on a search result page, wherein the target content comprises at least event information related to the target entity object in the target event, and a first multimedia content associated with the target entity object in the target event.

12. An electronic device, **characterized in** comprising:
a processor; and
a memory, used to store executable instructions,
wherein the processor is used to read the executable instructions from the memory and execute the executable instructions to achieve the content search method according to any one of claims 1-10.

13. A computer-readable storage medium, **characterized in that** a computer program is stored on the storage medium, and the computer program, when executed by a processor, causes the processor to achieve the content search method according to any one of claims 1-10.
